# EUROPEAN PATENT SPECIFICATION

(11) **EP 1 762 484 B1**
(45) Date of publication and mention of the grant of the patent: **10.02.2010**
(21) Application number: 06253038.1
(22) Date of filing: 13.06.2006
(51) Int. Cl.: B62M 25/04

(54) **Bicycle shift control mechanism**
Fahrrad-Schaltsteuerung
Mécanisme de changement de vitesse pour bicyclette

(30) Priority: 07.09.2005 US 220403
(43) Date of publication of application: 14.03.2007
(73) Proprietor: SHIMANO INC., Osaka 590-8577 (JP)
(72) Inventor: Sato, Hisayuki, Sakai City Osaka 590-8577 (JP)
(74) Representative: Murnane, Graham John

(56) References cited:
- EP-A- 1 366 981
- EP-A- 1 527 989
- EP-A2- 0 863 070
- FR-A- 2 819 232
- US-A- 5 662 000

## Description

This invention generally relates to a bicycle control device. More specifically, the present invention relates to a bicycle control device that performs shifting operations.

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. In particular, control devices for shifting have been extensively redesigned in recent years.

Currently, there are many types of cable operated shifting devices currently being installed on bicycles. For example, some cable operated shifting devices have a pair of shift levers and a cable winding mechanism that rotates via a ratchet mechanism. With conventional cable operated shifting devices of this type, operation of one of the shift lever causes the cable winder to rotate via the ratchet mechanism in one direction by one gear at a time. As a result, the cable is wound around the cable winder, and a shift is made by the shift mechanism from one gear to the next gear. Operation of the other shift lever causes the ratchet mechanism to be released and the cable winder to rotate in the other direction by one gear at a time. As a result, the cable that was wound on the cable winder is played out, and a shift is made in the opposite direction by the shift mechanism.

One example of a known indexed shifting device for bicycles is disclosed in U.S. Patent No. 5,203,213. In this patent, this type of shifting device basically includes a support shaft, a takeup reel, a first control lever and a second control lever. The support shaft is fixed to a bracket mounted on a handlebar. The takeup reel is rotatably mounted on the support shaft for alternately pulling and releasing a control cable. The first control lever pivots about the support shaft for causing the takeup reel to pull the control cable. The second control lever is configured for causing the takeup reel to release the control cable. The first control lever engages feed teeth on takeup reel through a feed pawl to cause the takeup reel to rotate in the cable pulling direction. The second control lever engages two sets of position retaining teeth on takeup reel through two pawls to cause the takeup reel to rotate in the cable release direction. The first control lever and the second control lever are both mounted at a position below the handlebar for operation by the index finger and thumb of a cyclist's hand.

EP 1 366 981 A2 discloses a bicycle shift control mechanism according to the preamble of claim 1.

Such a bicycle shifting apparatus operates quite satisfactorily for many users. However, these types of the shifting apparatuses present one disadvantage. In particular, when this type of shifting apparatus is used to operate a rear derailleur, for example, operation of the shifting apparatus causes an inner wire of a shift cable to be pulled during a winding operation. However, the rear derailleur does not usually move during the initial movement of the inner wire of the shift cable. In other words, if the inner wire is pulled by "x" millimeters by the rotation of the takeup reel, the end of the inner wire attached to the rear derailleur doesn't moves "x" millimeters. Rather, the end of the inner wire attached to the rear derailleur moves less than "x" millimeters. One reason of this loss of movement at the end of the inner wire attached to the rear derailleur is that at the very beginning of the pulling action, slack in the inner wire is compensated first, and therefore the rear derailleur is not being actuated during this initial movement of the inner wire of the shift cable. Moreover, the inner wire may be stretched a little bit when the inner wire is pulled.

One example of a rotatable grip shifter that uses an arrangement to solve this problem is disclosed in U.S. Patent No. 5,524,501. In this patent, a detent spring is provided that can move a little bit during the initial movement of the inner wire of the shift cable. However, this patent is specifically designed for rotatable grip actuating system.

In view of the above, it will be apparent to those skilled in the art from this disclosure that there exists a need for an improved bicycle control (shifting) device. This invention addresses this need in the art as well as other needs, which will become apparent to those skilled in the art from this disclosure.

According to the present invention, there is provided a bicycle shift control mechanism in accordance with Claim 1. A preferred embodiment provides a bicycle shift control mechanism that has a wire take up member, a winding ratchet member, and a positioning ratchet member. The wire take up member is configured and arranged to rotate about a rotational axis to wind and release a shift wire. The winding ratchet member is coupled to the wire take up member and arranged to rotate the wire take up member about the rotational axis. The positioning ratchet member is configured and arranged to selectively position the wire take up member between one of a plurality of predetermined shift positions. The positioning ratchet member is coupled to the wire take up member such that the wire take up member is movable relative to the positioning ratchet member for a predetermined amount of rotational movement of the wire take up member and move together as a unit after the predetermined amount of rotational movement. The positioning ratchet member and the winding ratchet member are separate members.

These and other objects, features, aspects and advantages of the present invention will become apparent to those skilled in the art from the following detailed descriptions, which, taken in conjunction with the annexed drawings, discloses a preferred embodiment of the present invention.

Referring now to the attached drawings which form a part of this original disclosure:

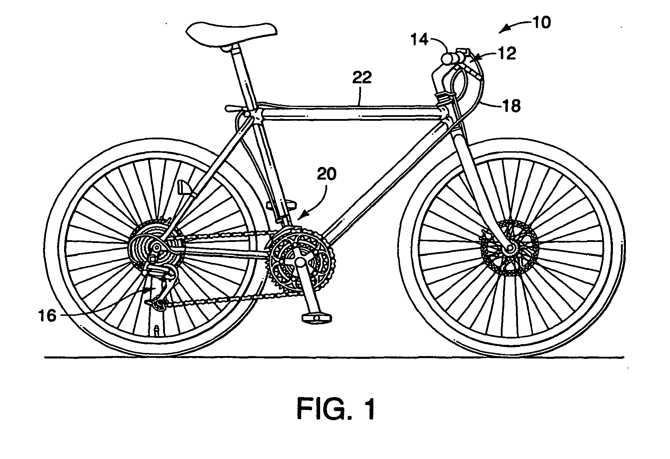

Figure 1 is a side elevational view of a bicycle equipped with a pair of control devices (only one shown) in accordance with a preferred embodiment of the present invention;

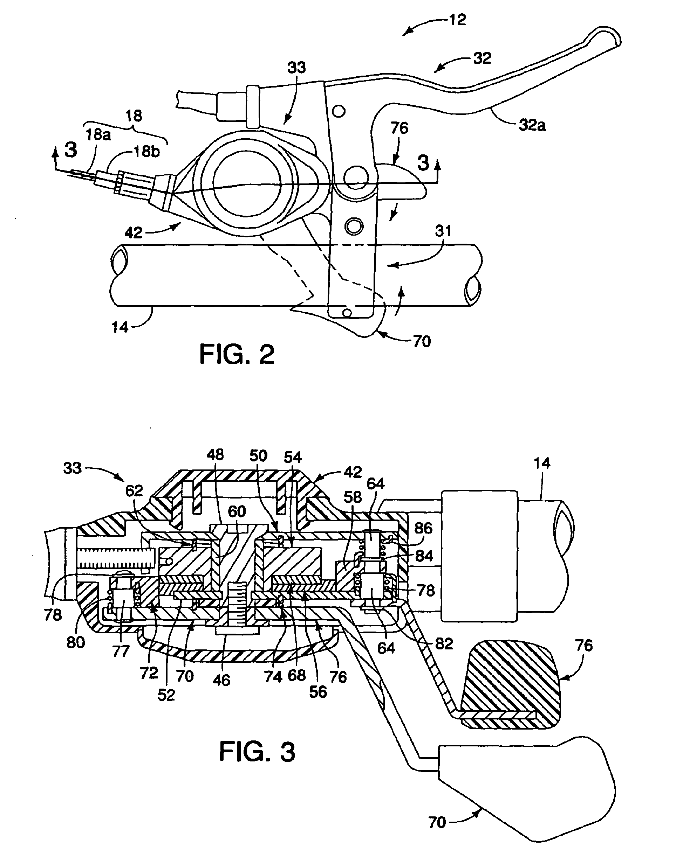

Figure 2 is a top plan view of one of the bicycle control devices mounted to the bicycle illustrated in Figure 1, with the operating members (shift levers) in the rest position;
Figure 3 is a partial cross sectional view of the bicycle control device as viewed along section line 3-3 of Figure 2;

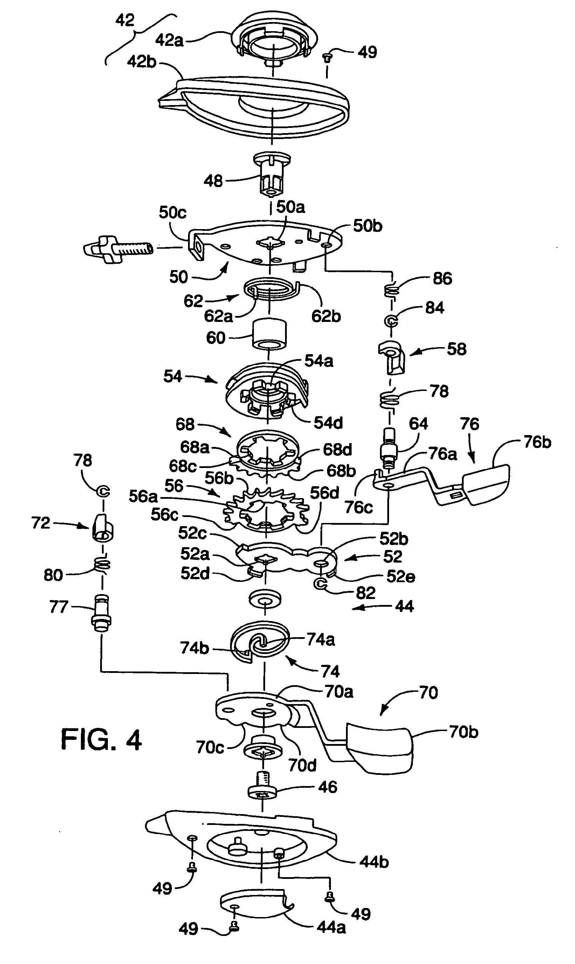

Figure 4 is an exploded perspective view of the bicycle control device illustrated in Figures 2 and 3 in accordance with the present invention;

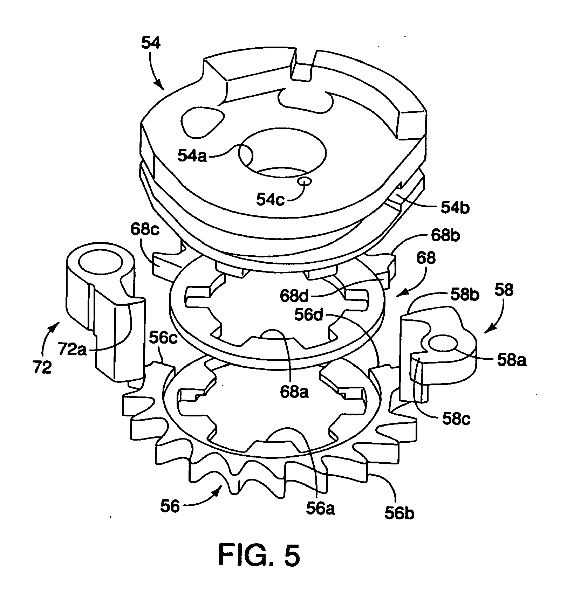

Figure 5 is an enlarged, exploded top perspective view of the position control mechanism for the bicycle control device illustrated in Figures 2-4 in accordance with the present invention;

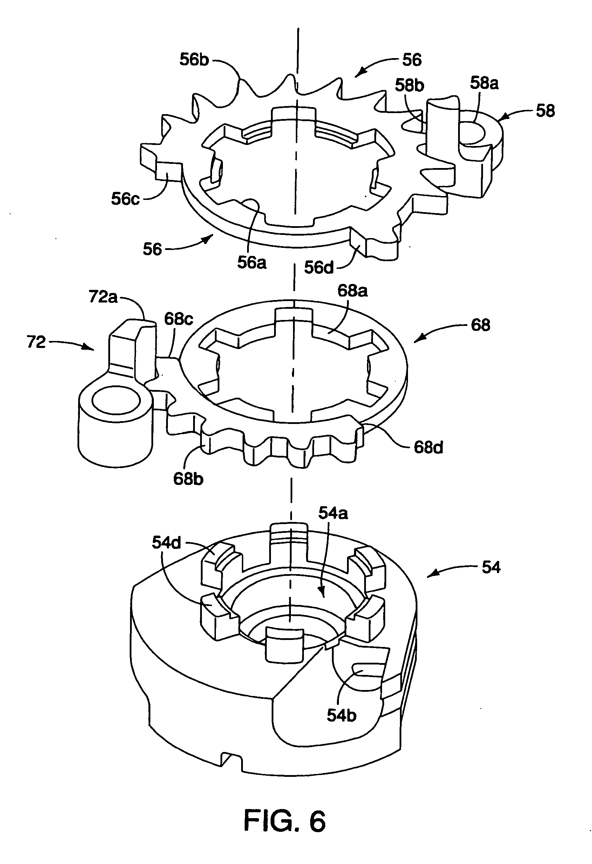

Figure 6 is an enlarged, exploded bottom perspective view of the position control mechanism for the bicycle control device illustrated in Figures 2-4 in accordance with the present invention;

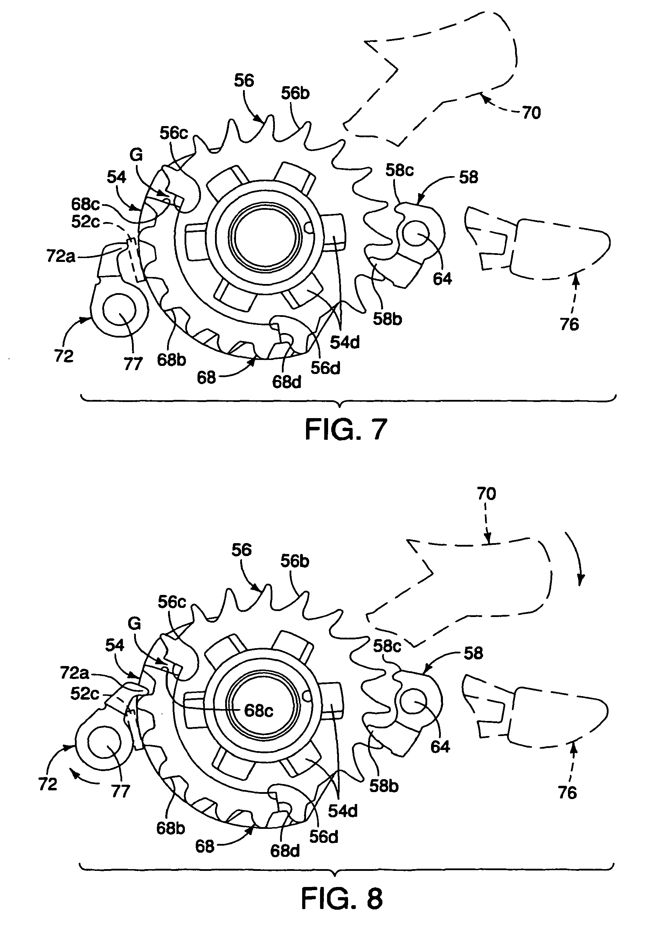

Figure 7 is a simplified bottom plan view of selected parts of the shift position control mechanism for the bicycle control device illustrated in Figures 2-4, with the wire take up member being held in a normal rest position by the positioning ratchet member and with the bicycle control device being in the first gear position, i.e., the inner wire of the rear shift cable being fully released from the wire takeup member;
Figure 8 is a simplified bottom plan view of the shift position control mechanism for illustrating the start of an inner wire winding operation of the bicycle control device illustrated in Figures 2-4, with the winding ratchet member being partially moved by the winding pawl in a winding direction from the normal rest position shown in Figure 7 to a ratchet engagement position such that the winding pawl contacts the positioning ratchet member;

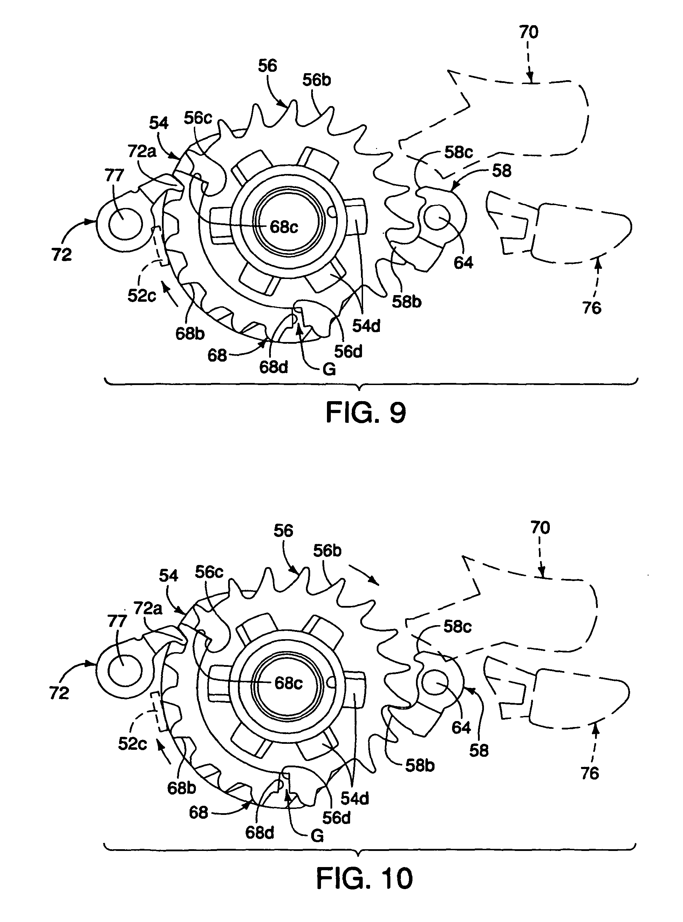

Figure 9 is a simplified bottom plan view of the shift position control mechanism for illustrating the start of an inner wire winding operation of the bicycle control device illustrated in Figures 2-4, with the winding ratchet member being partially moved by the winding pawl in a winding direction from the ratchet engagement position shown in Figure 7 to an inner wire tensioning position such that the winding ratchet member contacts the positioning ratchet member but does not rotate the positioning ratchet member;
Figure 10 is a simplified bottom plan view of the shift position control mechanism for illustrating an intermediate step of the winding operation of the bicycle control device illustrated in Figures 2-4, with the winding ratchet member being rotated by the winding pawl further in the winding direction from the inner wire tensioning position shown in Figure 9 to start rotation of the winding ratchet member;

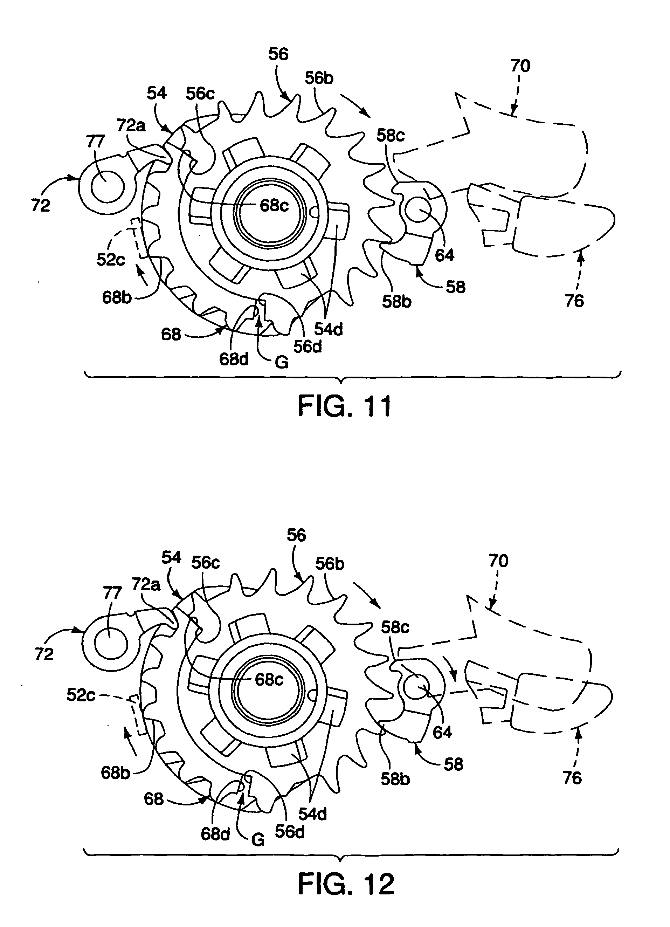

Figure 11 is a simplified bottom plan view of the shift position control mechanism for illustrating an intermediate step of the winding operation of the bicycle control device illustrated in Figures 2-4, with the winding ratchet member being rotated by the winding pawl further in the winding direction from the position shown in Figure 10 to rotate the positioning ratchet member such that the positioning pawl moves out of engagement from the positioning ratchet member;
Figure 12 is a simplified bottom plan view of the shift position control mechanism for illustrating an intermediate step of the winding operation of the bicycle control device illustrated in Figures 2-4, with the winding ratchet member being rotated by the winding pawl further in the winding direction from the position shown in Figure 11 to rotate the positioning ratchet member such that the positioning pawl moves from one positioning tooth to the next adjacent positioning tooth;

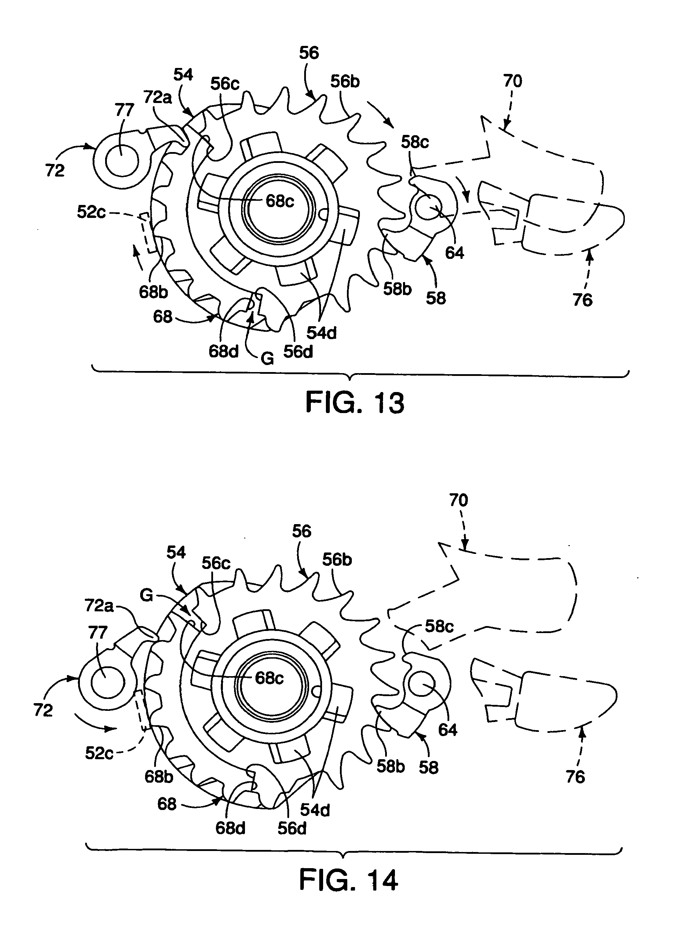

Figure 13 is a simplified bottom plan view of the shift position control mechanism for illustrating a completed shift step of the winding operation of the bicycle control device illustrated in Figures 2-4, with the positioning pawl being rotated to completely engage the next adjacent positioning tooth;
Figure 14 is a simplified bottom plan view of the shift position control mechanism for illustrating a winding lever returning step of the winding operation of the bicycle control device illustrated in Figures 2-4, with the winding ratchet member being released by the winding pawl so as to start rotating in the opposite direction such that a gap is formed between the winding ratchet member and the positioning ratchet member;

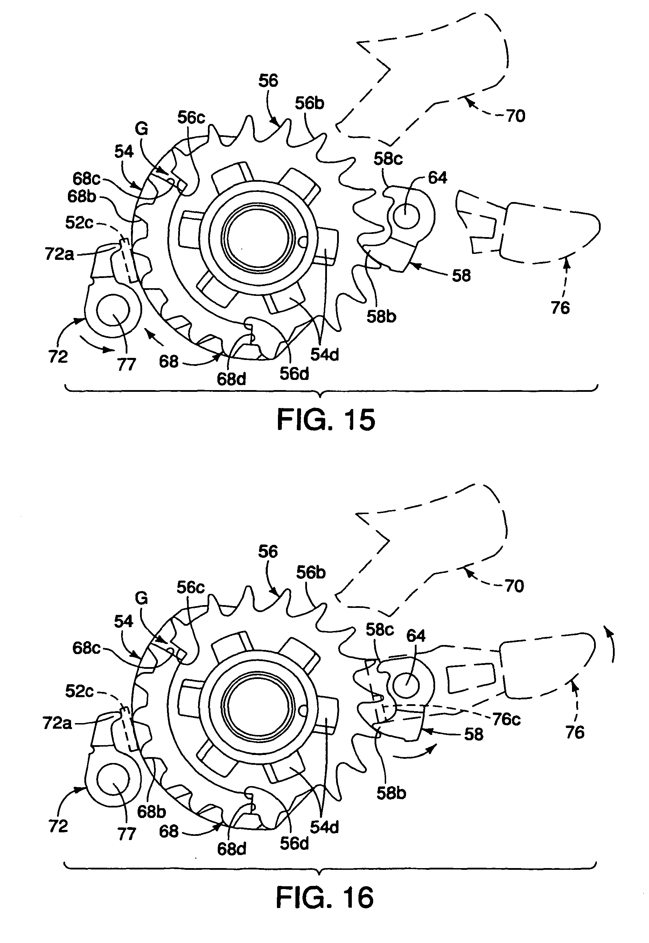

Figure 15 is a simplified bottom plan view of the shift position control mechanism for illustrating a rest position of the bicycle control device illustrated in Figures 2-4, with the winding pawl being rotate further in the opposite direction from the position shown in Figure 13 such that the winding pawl moves away from path of the winding teeth;
Figure 16 is a simplified bottom plan view of the shift position control mechanism for illustrating an initial step of an inner wire release operation of the bicycle control device illustrated in Figures 2-4, with the positioning pawl being partially moved by the release lever from the normal rest position shown in Figure 15 to an intermediate release position such that the positioning pawl starts to release one positioning tooth and starts to contact to another positioning tooth simultaneously with the positioning ratchet member remaining stationary;

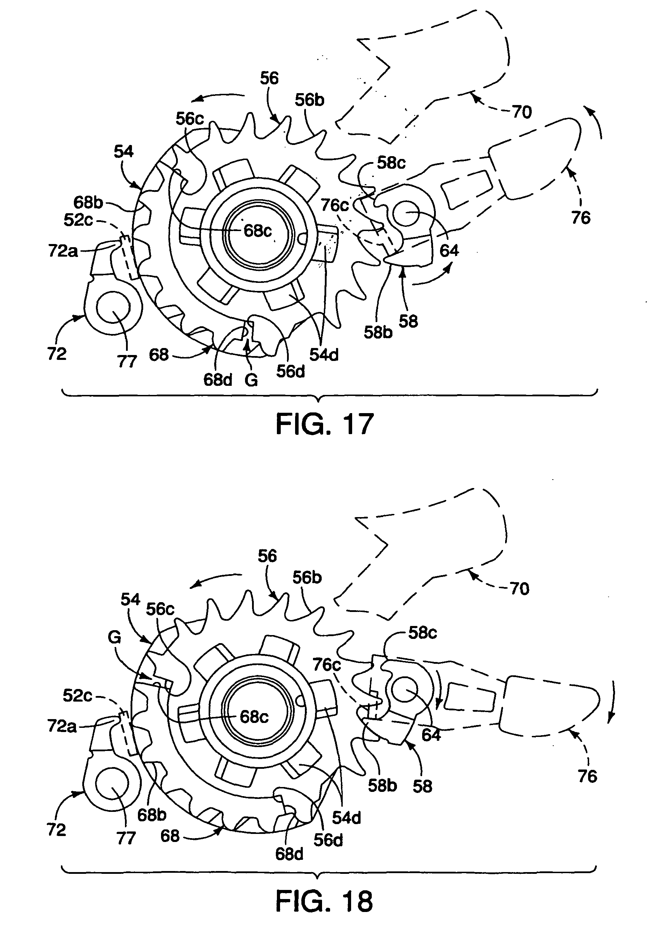

Figure 17 is a simplified bottom plan view of the shift position control mechanism for illustrating an intermediate step of the release operation of the bicycle control device illustrated in Figures 2-4, with the positioning pawl being moved by the release lever from the position shown in Figure 16 to a release position such that the positioning ratchet member rotates one shift position; and
Figure 18 is a simplified bottom plan view of the shift position control mechanism for illustrating a final step of the release operation of the bicycle control device illustrated in Figures 2-4, with the positioning pawl being completely returned to the rest position by the return of the release lever to the rest position such that the positioning pawl engages the next positioning tooth to complete the shift operation.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

Referring initially to Figure 1, a bicycle 10 is illustrated with a bicycle control device 12 mounted on a bicycle handlebar 14 in accordance with one embodiment of the present invention. The bicycle control device 12 is a right hand side control device 12 operated by the rider's right hand. The bicycle control device 12 is preferably operatively coupled to a rear derailleur 16 via a shift control cable 18.

Preferably, the bicycle 10 includes a left hand side bicycle control device (not shown) that is substantially identical to the bicycle control device 12, except for the shifting unit has been modified to reduce the number of gears that can be shifted. Preferably, the left hand side bicycle control device is operatively coupled to a front derailleur 20 via a shift control cable 22.

Alternatively, the control devices can be switched so that the rider can operate the rear derailleur 16 and the front derailleur 20 with opposite hands. In any event, the left hand side bicycle control device is essentially identical in construction and operation to the control device 12, except that it is a mirror image of the control device 12 and the number of shift positions for the left hand side bicycle control device is different. Thus, only the control device 12 will be discussed and illustrated herein. Preferably, the cables 18 and 22 are conventional bicycle cables that have an outer casing the covers an inner wire. For example, the shift control cable 18 has an inner wire 18a and an outer casing 18b.

Since most of the parts of the bicycle 10 are well known in the art, the parts of the bicycle 10 will not be discussed or illustrated in detail herein, except for the parts that relate to the present invention. In other words, only the parts related to the bicycle control device 12 will be discussed and illustrated in detail herein. Moreover, various conventional bicycle parts such as brakes, additional sprockets, derailleurs, etc., which are not illustrated and/or discussed in detail herein, can be used in conjunction with the present invention. Moreover, as used herein to describe the bicycle control device 12, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the bicycle control device 12 of the present invention.

Referring now to Figure 2, the bicycle control device 12 is illustrated in the rest position. The bicycle control device 12 basically includes a bicycle handlebar mounting portion 31, a braking unit 32 and a shifting unit 33. In this embodiment, the braking unit 32 and the shifting unit 33 are integrated onto the mounting portion 31. However, it will be apparent to those skilled in the art from this disclosure that the braking unit 32 and the shifting unit 33 can be separately mounted devices as needed and/or desired.

As best seen in Figure 2, the handlebar mounting portion 31 is configured and arranged to be secured to the handlebar 14 or other structural member of the bicycle 10. The handlebar mounting portion 31 has a clamping section that is preferably a split bore type of clamping arrangement in which the diameter of the bore is varied by a fixing bolt in a conventional manner. The clamping section is relatively conventional in construction, and thus, will not be discussed or illustrated in further detail herein.

The braking unit 32 has a brake lever 32a that is pivotally mounted to the bicycle handlebar mounting portion 31 to pull and release an inner wire of a brake cable in a conventional manner. The configuration of the braking unit 32 can be any configuration, and thus, will not be discussed in further detail herein. In fact, the braking unit 32 can be eliminated from the bicycle control device 12 as needed and/or desired.

Referring now to Figures 3 and 4, the shifting unit 33 will be now be described in more detail. The shifting unit 33 basically has a housing 40 that encloses the shifting components (a shift position control mechanism, a shift wire winding assembly and a shift wire releasing assembly).

As best seen in Figure 3, the housing 40 of the shifting unit 33 basically includes an upper casing 42 and a lower casing 44. The upper casing 42 and the lower casing 44 are preferably constructed of one or more lightweight materials such a hard rigid plastic material or a combination of hard rigid plastic and metal materials as needed and/or desired. The housing 40 is sized and configured to form an internal cavity for receiving the shift position control mechanism, the shift wire winding assembly and the shift wire releasing assembly therein.

The upper casing 42 and the lower casing 44 are fastened to the shift position control mechanism by a plurality of screws 49 to enclose the shifting components. The upper casing 42 includes a first upper cover portion 42a and a second upper cover portion 42b that are connected by a snap-fit. The upper casing 42 is fastened to the shift position control mechanism to form an upper cover. The lower casing 44 includes a first lower cover portion 44a and a second lower cover portion 44b that are fastened to the shift position control mechanism to form a lower cover.

As best seen in Figure 3, the shift position control mechanism of the shifting unit 33 basically includes a main mounting member or plate 50, a secondary mounting member or plate 52, a wire take up member 54, a positioning ratchet member or plate 56, a position maintaining pawl 58, a spacer or bushing 60 and a wire take up release spring or biasing member 62. The bicycle shift position control mechanism is configured and arranged to maintain the wire take up member 54 in one of a plurality of shift positions. The shift position control mechanism is operated by the shift wire winding assembly to pull or wind the inner wire 18a about the wire take up member 54, and by the shift wire releasing assembly to release or unwind the inner wire 18a from the wire take up member 54. The shift wire winding assembly basically includes a winding ratchet member or plate 68, a shift winding lever 70 with a winding pawl 72, and a shift winding lever return spring 74. Thus, the shift wire winding assembly is configured and arranged such that the rider can easily operate the shift winding lever 70 to perform a shift winding operation as sequentially illustrated in Figures 7-15. The shift wire releasing assembly, on the other hand, basically includes a shift release lever 76 coupled to the position maintaining pawl 58 and a shift release lever return spring 78. The shift wire releasing assembly is configured and arranged such that the rider can easily operate the shift release lever 76 to perform a shifting operation as sequentially illustrated in Figures 15-18.

The shift position control mechanism of the shifting unit 33 will now be discussed in more detail with reference to Figures 3-6. The main mounting plate 50 is preferably a metal plate that is configured to be fixed to the handlebar mounting portion 31. The main mounting plate 50 has a centrally located opening 50a that receives a main pivot post 48 in a non-rotatable manner. The main mounting plate 50 also has a pivot pin mounting hole 50b for mounting a portion of the shift wire releasing assembly thereto as described below. Several threaded holes are provided for securing the upper and lower casings 42 and 44 thereto by the screws 49.
Finally, the main mounting plate 50 has a wire nut mounting flange 50c with a threaded hole for adjustably attaching a wire adjustment nut thereto for adjusting the control cable 18.

The secondary mounting plate 52 is preferably a metal plate that has a main mounting opening 52a that receives the main pivot post 48 in a non-rotatable manner. The secondary mounting plate 52 has a pivot pin mounting hole 52b for mounting a portion of the shift wire releasing assembly thereto as described below. The secondary mounting plate 52 further includes a winding pawl abutment 52c, a winding lever stop tab 52d and a release lever stop tab 52e.

As best seen in Figures 5 and 6, the wire take up member 54 is a conventional type wire take up spool in which the inner wire 18a is wound along the peripheral edge surface of the wire take up member 54 as the wire take up member 54 is rotated in a wire winding direction. Thus, the wire take up member 54 has a center opening 54a that is rotatably mounted on the main pivot post 48. The peripheral edge of the wire take up member 54 has a wire attachment opening 54b for attaching the inner wire 18a of the shift cable 18 thereto. Also the upper surface of the wire take up member 54 has a hole 54c for attaching the wire take up release spring 62 thereto. Thus, the wire take up release spring 62 biases the wire take up member 54 in a shift release or wire unwinding direction where the inner wire 18a is unwound from the peripheral edge of the wire take up member 54. The lower surface of the wire take up member 54 has a plurality of projections 54d which engage a plurality of recesses formed in the positioning ratchet plate 56 and the winding ratchet plate 68. The winding ratchet plate 68 is fixed to the wire take up member 54 so that they rotate together as a unit when the shifting unit 33 is in the assembled state. The positioning ratchet plate 56, on the other hand, is configured to permit a limited amount of rotational play of the positioning ratchet plate 56 relative to the wire take up member 54 and the winding ratchet plate 68, which are fixed together. More specifically, the gap G exists between the positioning ratchet plate 56 and the winding ratchet plate 68 when the wire take up member 54, the positioning ratchet plate 56 and the winding ratchet plate 68 are in their rest positions as seen in Figure 7.

Accordingly, during a shift winding operation, the shift winding lever 70 is pushed by the rider to cause the winding pawl 72 for engaging the winding ratchet plate 68 such that the winding ratchet plate 68 and the wire take up member 54 rotate together. Initially, the winding ratchet plate 68 and the wire take up member 54 rotate together, while the positioning ratchet plate 56 remains stationary. During this initial rotation of the winding ratchet plate 68, the inner wire 18a is pulled by the rotation of the wire take up member 54. After this initially rotation of the winding ratchet plate 68, the positioning ratchet plate 56 is engaged by the winding ratchet plate 68 so that the positioning ratchet plate 56 moves with the winding ratchet plate 68 and the wire take up member 54 to pivot the position maintaining pawl 58 to cause a shift to occur. When a shift has been completed, i.e., the position maintaining pawl 58 fully engaged with the positioning ratchet plate 56 again, as seen in Figure 13, the shift winding lever return spring 74 moves the shift winding lever 70 back to its rest position when the rider releases the shift winding lever 70. Simultaneously, the wire take up member 54 rotates back in a wire unwinding direction so that the winding ratchet plate 68 is rotationally separated from the positioning ratchet plate 56 by the gap G, as seen in Figure 14.

Accordingly, when the wire take up member 54 has been fully rotated by the shift winding lever 70 to complete a shift position in shown in Figure 13 and prior to the shift winding lever 70 being released, the guide pulley of the rear derailleur 16 is located at a position slightly past a position exactly under a corresponding one of the rear sprockets. This especially facilitates a shifting from a smaller rear sprocket to next larger sprocket. Then, after the shift winding lever 70 is released, the guide pulley will move its most suitable position.

As seen in Figure 5 and 6, preferably, the positioning ratchet member 56 is preferably a flat metal plate that is rotatable about the main pivot post 48. The positioning ratchet member 56 is nested together with the winding ratchet plate 68 on the bottom side of the wire take up member 54 with the limited amount of rotational play as discussed above. In particular, the positioning ratchet member 56 is configured and arranged to selectively engage the position maintaining pawl 58 to maintain the wire take up member 54 in one of a plurality of predetermined shift positions against the force of the wire take up release spring 62. Thus, the positioning ratchet plate 56 is fixed to the wire take up member 54, with the gap G in this case, such that they rotate together in response to operation of either the shift wire winding assembly or the shift wire releasing assembly. More specifically, the positioning ratchet plate 56 is biased in the shift release or wire unwinding direction where the inner wire 18a is unwound from the peripheral edge of the wire take up member 54, but normally held in one of the shift positions by the position maintaining pawl 58.

The positioning ratchet plate 56 preferably includes a non-circular opening 56a that is configured and arranged to mate with the projections 54d of the wire take up member 54 to allow limited relative rotation therebetween. Preferably, the peripheral surface of the positioning ratchet plate 56 is provided with a plurality of shift positioning teeth 56b and a pair of stops 56c and 56d. The shift positioning teeth 56b are configured and arranged to selectively engage the position maintaining pawl 58 such that the wire take up member 54 can be selectively held in one of the shift positions.

The position maintaining pawl 58 is pivotally coupled between the main mounting plate 50 and the secondary mounting plate 52 by a pivot pin 64 which is riveted at one end to the main mounting plate 50 via the pivot pin mounting hole 50b. The other end of the pivot pin 64 is disposed in the pivot pin mounting hole 52b of the secondary mounting plate 52. The position maintaining pawl 58 is held on the pivot pin 64 and coupled to the secondary mounting plate 52 by a retaining clip 82. Moreover, the position maintaining pawl 58 is normally urged by a torsion spring 86 into engagement with one of the shift positioning teeth 56b. The torsion spring 86 has a first end of the torsion spring 86 engaging the position maintaining pawl 58 and a second end of the torsion spring 86 engaging the main mounting plate 50. Thus, the position maintaining pawl 58 configured and arranged to selectively move between a first engagement position that holds the positioning ratchet plate 56 in one of the predetermined shift positions and a first disengagement position that releases the positioning ratchet plate 56 for limited rotational movement.

The position maintaining pawl 58 includes a pivot opening 58a, a first engagement tooth 58b and a second engagement tooth 58c. The pivot opening 58a of the position maintaining pawl 58 receives the pivot pin 64 to pivotally mount the position maintaining pawl 58 relative to the main mounting plate 50 and the secondary mounting plate 52. The first and second engagement teeth 58b and 58c are spaced apart to selectively engage the shift positioning teeth 56b to perform a shifting operation in a manner discussed below.

The bushing 60 maintains proper spacing between the main mounting plate 50 and the secondary mounting plate 52 to rotatably support the wire take up member 54, the positioning ratchet plat 58 and the winding ratchet plate 68 therebetween.

The wire take up release spring 62 is preferably a torsion spring having a first end 62a located in the hole 54c of the wire take up member 54, and a second end 62b coupled to the main mounting plate 50. The wire take up release spring 62 applies a biasing force to urge the wire take up member 54 in the wire unwinding direction.

The shift wire winding assembly of the shifting unit 33will now be discussed in more detail with reference to Figures 3-6. The winding ratchet member 68 is coupled to the wire take up member 54 and arranged to rotate the wire take up member 54 about a rotational axis formed by the main pivot post 48 and a screw 46. As best seen in Figure 6, the winding ratchet member 68 preferably includes a non-circular opening 68a that is configured and arranged to mate with the projections 54d of the wire take up member 54 to prevent relative rotation therebetween. Preferably, the peripheral surface of the winding ratchet member 68 is provided with a plurality of shift winding teeth 68b and a pair of stops 68c and 68d. The shift winding teeth 68b are configured and arranged to be engaged with a tooth of the winding pawl 72 such that the wire take up member 54 can be moved between the different shift positions in response to movement of the shift winding lever 70.

As best seen in Figure 4, the shift winding lever 70 basically includes an internal mounting portion 70a and an external rider operating portion 70b. The internal mounting portion 70a is configured and arranged to pivot around the outer periphery of the main pivot post 48 such that the shift winding lever 70 can move between the rest position and the shift winding position as mentioned above. The shift winding lever 70 is configured and arranged to pull the inner wire 18a by rotating the wire take up member 54 against the urging force of the wire take up release spring 62. The internal mounting portion 70a preferably includes a pair of stops 70c and 70d formed on its peripheral edge for limiting the pivotal movement of the shift winding lever 70. The stop 70c of the shift winding lever 70 is normally resting against the winding lever stop tab 52d in the rest position due to the biasing force of the winding lever return spring 74. Thus, movement of the shift winding lever 70 causes the winding pawl 72 to rotate therewith about the center axis of the main pivot post 48.

The winding pawl 72 is mounted to the shift winding lever 70 via a mounting pin 77 that is riveted onto the internal mounting portion 70a of the shift winding lever 70. The winding pawl 72 is held on the mounting pin 77 by a retaining clip 78. Moreover, the winding pawl 72 is biased in a direction by a torsion spring 80 into engagement with the winding pawl abutment52c when the shift winding lever 70 is in the rest position and into engagement with one of the winding teeth 68b when the shift winding lever 70 is moved to its shift winding position. In particular, as seen in Figures 5 and 6, the winding pawl 72 has an engagement tooth or projection 72a that selectively engages one of the winding teeth 68b to rotate the winding ratchet member 68 which in turn rotates the wire take up member 54. The positioning ratchet plate 56 will also move with the winding ratchet member 68 and the wire take up member 54, but after a limited amount of rotational movement of the winding ratchet member 68 and the wire take up member 54 relative to the positioning ratchet plate 56.

As seen in Figure 3, the torsion spring 80 has a first end of the torsion spring 80 engaging the winding pawl 72 and a second end of the torsion spring 80 engaging the internal mounting portion 70a of the shift winding lever 70. The winding pawl 72 is configured and arranged to selectively engage the bicycle shift position control mechanism when the shift winding lever 70 is pivoted from its rest position to its shift winding position. This shifting can be performed in a single progressively movement of the shift winding lever 70 without stopping or returning to the shift winding lever 70 to the rest position such that multiple gears shifts occur in the single shift operation.

The winding lever return spring 74 is preferably a torsion spring having a first end 74a engaging the shift winding lever 70 and a second end 74b engaging the secondary mounting plate 52. The winding lever return spring 74 biases the shift winding lever 70 to the rest position. Accordingly, the shift winding lever 70 and the winding lever return spring 74 cooperate together such that the shift winding lever 70 acts as a trigger action in which the shift winding lever 70 automatically springs back to its rest position after being moved to the shift release position.

The shift wire releasing assembly of the shifting unit 33 will now be discussed in more detail with reference to Figures 3-6. The shift release lever 76 preferably has an internal mounting portion 76a and an external rider operating portion 76b. The shift release lever 76 is configured and arranged to release the inner wire 18a by releasing the wire take up member 54 so that the wire take up member 54 rotates under the urging force of the wire take up release spring 62. The internal mounting portion 76a is configured and arranged to pivot around the outer periphery of the pivot pin 64 such that the shift release lever 76 can move between the rest position and the shift release position as mentioned above. The pivot pin 64 is secured to the secondary mounting plate 52 by a retaining clip 82 as seen in Figure 3. The internal mounting portion 76a preferably includes a release tab 76c for pivoting the position maintaining pawl 58. Thus, movement of the shift release lever 76 causes the position maintaining pawl 58 to rotate therewith about the center axis of the pivot pin 64.

The release lever return spring 78 is preferably a torsion spring having a first end engaging the shift release lever 76 and a second end engaging the secondary mounting plate 52. The release lever return spring 78 biases the shift release lever 76 to a rest position. Accordingly, the shift release lever 76 and the release lever return spring 78 cooperate together such that the shift release lever 76 acts as a trigger action in which the shift release lever 76 automatically springs back to its rest position after being moved to a shift release position.

The position maintaining pawl 58 is held on the mounting pin 64 by a retaining clip 84 as seen in Figure 3. Moreover, the position maintaining pawl 58 is biased in a direction by a torsion spring 86 such that the first engagement tooth 58b of the position maintaining pawl 58 normal engages one of the shift positioning teeth 56b as seen in Figure 7. The torsion spring 86 has a first end engaging the position maintaining pawl 58 and a second end engaging the main mounting plate 50 as seen in Figure 3. The position maintaining pawl 58 is configured and arranged to selectively disengage the first engagement tooth 58b from the shift positioning teeth 56b when the shift release lever 76 is pivoted from its rest position to its shift release position. When the shift release lever 76 is pivoted to its shift release position, the first engagement tooth 58b is moved out of the path of the positioning ratchet plate 56 and the second engagement tooth 58c is moved into the path of the positioning ratchet plate 56, as seen in Figure 17. Thus, the wire take up release spring 62 will then rotate the wire take up member 54 and the positioning ratchet plate 56 together until one of the shift positioning teeth 56b contacts the second engagement tooth 58c. Once the shift release lever 76 is released by the rider, the first engagement tooth 58b of the position maintaining pawl 58 will engage one of the shift positioning teeth 56b.

As seen in Figures 7 and 16, when the bicycle transmission is not in the process of being shifted, the engagement tooth or projection 72a of the winding pawl 72 rests on the winding pawl abutment 52c of secondary mounting plate 52. When the drive chain is to be shifted to the next adjacent freewheel sprocket, then the shift winding lever 70 is rotated in the wire winding direction from the position shown in Figure 7 to the position shown in Figure 13 so as to complete a single shift operation. This movement of the shift winding lever 70 causes the winding pawl 72 to move so that engagement projection 72a of the winding pawl 72 moves beyond the winding pawl abutment 52c on the secondary mounting plate 52, drops into the gap between a pair of the winding teeth 68b, and presses against a driving side of one of the winding teeth 68b as seen in Figure 8. Further movement of the shift winding lever 70 causes the winding ratchet member 68 and the wire take up member 54 to move together as unit while the positioning ratchet plate 56 remains stationary as seen in Figure 9. Once the stop 68c of the winding ratchet member 68 contacts the stop 56c of the positioning ratchet plate 56, the positioning ratchet plate 56 will rotate together with the winding ratchet member 68 and the wire take up member 54 as unit as seen in Figure 10. Since the position maintaining pawl 58 is rotatably mounted to the pivot pin 64, the position maintaining pawl 58 rotates when one of the shift positioning teeth 56b presses against it, thus causing the first engagement tooth 58b of the position maintaining pawl 58 to ride out of engagement from the shift positioning teeth 56b as seen in Figure 11. However, since the position maintaining pawl 58 is spring biased into engagement with the shift positioning teeth 56b by the spring 86, the position maintaining pawl 58 will pivot back into engagement with the next adjacent one of the shift positioning teeth 56b as seen in Figure 12. Thereafter, when shift winding lever 70 is released, the spring 74 causes the shift winding lever 70 to return to the rest position and the winding pawl 72 to retract to the position as seen in Figure 16. However, during this retraction of the shift winding lever 70 and the winding pawl 72, the winding ratchet member 68 and the wire take up member 54 both rotate a small amount while the positioning ratchet plate 56 remains stationary as seen in Figure 15.

When the chain is to be shifted in the opposite direction to the next adjacent gear, the shift release lever 76 is rotated from the rest position as seen in Figure 15 to the shift release position as seen in Figure 16. This movement of the shift release lever 76 causes the release tab 76c of the shift release lever 76 to press against the position maintaining pawl 58 to rotate the position maintaining pawl 58. This rotation of the position maintaining pawl 58 causes the first engagement tooth 58b of the position maintaining pawl 58 to ride out of engagement from the shift positioning teeth 56b while moving the second engagement tooth 58c into engagement with one of the shift positioning teeth 56b as seen in Figure 17. In other words, initially, the first engagement tooth 58b abuts against one of the shift positioning teeth 56b as seen in Figure 15. As position maintaining pawl 58 rotates, the first engagement tooth 58b moves up the side of one of the shift positioning teeth 56b until the tip of the first engagement tooth 58b clears the tip of the one of the shift positioning teeth 56b as seen in Figure 16. When this occurs, the positioning ratchet plate 56, which is biased in the wire unwinding direction by the spring 62, moves in the wire unwinding direction until the adjacent one of the shift positioning teeth 56b abuts against the second engagement tooth 58c as seen in Figure 17. Since the engagement projection 72a of the winding pawl 72 is resting on the winding pawl abutment 52c of the secondary mounting plate 52, the winding pawl 72 does not interfere with rotation of the positioning ratchet plate 56, the winding ratchet member 68 and the wire take up member 54. When the shift release lever 76 is released, the spring 78 causes the shift release lever 76 to rotate back to the position as seen in Figure 18. Thus, release of the shift release lever 76 causes the release lever tab 76c to disengage from the position maintaining pawl 58 as seen in Figure 18. Since the position maintaining pawl 58 is biased by spring 86, the position maintaining pawl 58 begins to rotate so that the second engagement tooth 58c moves up the side of the one of the shift positioning teeth 56b until the tip of the second engagement tooth 58c clears the tip of the one of the shift positioning teeth 56b. When this occurs, the positioning ratchet plate 56, the winding ratchet member 68 and the wire take up member 54, which are biased in the wire unwinding direction by the spring 62, rotate until the first engagement tooth 58b abuts against one of the shift positioning teeth 56b, thus completing the shifting operation.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Components shown as separate parts may be integrally formed, and the shape, orientation or location of the components may be altered as desired. Furthermore, the foregoing descriptions of the embodiments according to the present invention are provided for illustration only, and not for the purpose of limiting the invention as defined by the appended claims.

## Claims

1. A bicycle shift control mechanism comprising:
a wire take up member (54) configured and arranged to rotate about a rotational axis to wind and release a shift wire (18a);
a winding member (68) coupled to the wire take up member (54) and arranged to rotate the wire take up member (54) about the rotational axis; and
a positioning member (56) coupled to the wire take up member (54), whereby the positioning member (56) and the winding member (68) are separate members and whereby
the positioning member (56) is configured and arranged to selectively position the wire take up member (54) in one of a plurality of predetermined shift positions, **characterised in that** the positioning member (56) is coupled to the wire take up member (54) such that the wire take up member (54) is movable relative to the positioning member (56) for a first predetermined amount of rotational movement during a rotational movement of the wire take up member (54) and move together as a unit after said first predetermined amount of rotational movement during said rotational movement of the wire take-up member.

2. The bicycle shift control mechanism according to claim 1, wherein
the positioning member (56) is further configured and arranged to rotate about the rotational axis of the wire take up member (54). ,

3. The bicycle shift control mechanism according to either preceding claim, wherein
the positioning member (56) has a non-circular opening (56a) that is centrally located and engages a mating projection (54d) fixed to the wire take up member (54) with a rotational play formed therebetween to produce the predetermined amount of rotational movement between the wire take up member (54) and the positioning member (56).

4. The bicycle shift control mechanism according to any preceding claim, wherein
the positioning member (56) has a peripheral edge with a plurality of peripheral positioning teeth(56b).

5. The bicycle shift control mechanism according to claim 4, further comprising
a position maintaining pawl (58) configured and arranged to selectively engage the peripheral positioning teeth (56b) of the positioning member (56) to selectively index the wire take up member (54) and the positioning member (56).

6. The bicycle shift control mechanism according to any preceding claim, further comprising
a release biasing member (62) configured and arranged to urge the wire take up member (54) in a first rotational direction to a rest position.

7. The bicycle shift control mechanism according to any preceding claim, wherein
the winding member (68) has a peripheral edge with a plurality of peripheral winding teeth (68b).

8. The bicycle shift control mechanism according to claim 1, wherein
the winding member (68) has a non-circular opening (68a) that is centrally located and engages a mating projection (54d) fixed to the wire take up member (54) to rotate therewith.

9. The bicycle shift control mechanism according to claim 8, wherein
the positioning member (56) has a non-circular opening (56a) that is centrally located and engages the mating projection (54d) fixed to the wire take up member (54) with a rotational play formed therebetween to produce the predetermined amount of rotational movement between the wire take up member (54) and the positioning member (56).

10. The bicycle shift control mechanism according to claim 9, wherein
the mating projection (54d) fixed to the wire take up member (54) includes a plurality of generally radial abutments.

11. The bicycle shift control mechanism according to either claim 9 or claim 10, wherein
the positioning member (56) has a peripheral edge with a plurality of peripheral positioning teeth (56b), and
the winding member (68) has a peripheral edge with a plurality of peripheral winding teeth (68b).

12. The bicycle shift control mechanism according to claim 11, further comprising
a position maintaining pawl (58) configured and arranged to selectively engage the peripheral positioning teeth (56b) of the positioning member (56) to selectively index the wire take up member (54) and the positioning member (56) in a first rotational direction, and
a winding pawl (72) configured and arranged to selectively engage the peripheral winding teeth (68b)of the winding member (68) to selectively index the wire take up member (54) and the positioning member (56) in a second rotational direction that is opposite to the first rotational direction.

13. The bicycle shift control mechanism according to claim 12, further comprising
a release biasing member (62) configured and arranged to urge the wire take up member (54) in the first rotational direction to a rest position in which the rotational play formed between the wire take up member (54) and the positioning member allows the wire take up member (54) and the winding member (68) to move in the second rotational direction by the predetermined amount of rotational movement before the positioning member (56) begins to rotate with the wire take up member (54).

14. The bicycle shift control mechanism according to either claim 12 or claim 13, further comprising
a releasing member (76) configured and arranged to selectively move the position maintaining pawl (58) between a position maintaining position and a position indexing position.

15. The bicycle shift control mechanism according to claim 14, wherein
the releasing member (76) is configured and arranged to rotate about a rotational axis that is offset from the rotational axis of the wire take up member (54).

16. The bicycle shift control mechanism according to claim 14, further comprising
a winding member (70) configured and arranged to selectively move the winding pawl (72) between a rest position and a winding position.

17. The bicycle shift control mechanism according to claim 16, wherein
the winding member (70) is configured and arranged to rotate about the rotational axis of the wire take up member (54).

## Patentansprüche

1. Ein Fahrradschaltungssteuermechanismus, der Folgendes beinhaltet:
ein Kabelaufnahmeelement (54), das konfiguriert und eingerichtet ist, um sich um eine Drehachse zu drehen, um ein Schaltungskabel (18a) aufzuwickeln und freizugeben;
ein Wickelelement (68), das an das Kabelaufnahmeelement (54) gekoppelt und eingerichtet ist, um das Kabelaufnahmeelement (54) um die Drehachse zu drehen; und
ein Positionierelement (56), das an das Kabelaufnahmeelement (54) gekoppelt ist, wobei das Positionierelement (56) und das Wickelelement (68) separate Elemente sind und wobei das Positionierelement (56) konfiguriert und eingerichtet ist, um das Kabelaufnahmeelement (54) selektiv in einer einer Vielzahl von vorgegebenen Schaltungspositionen zu positionieren,
**dadurch gekennzeichnet, dass** das Positionierelement (56) so an das Kabelaufnahmeelement (54) gekoppelt ist, dass das Kabelaufnahmeelement (54) während einer Drehbewegung des Kabelaufnahmeelements (54) relativ zu dem Positionierelement (56) um einen ersten vorgegebenen Betrag an Drehbewegung bewegt werden kann und sie sich nach dem ersten vorgegebenen Betrag an Drehbewegung während der Drehbewegung des Kabelaufnahmeelements als eine Einheit zusammen bewegen.

2. Fahrradschaltungssteuermechanismus gemäß Anspruch 1, wobei
das Positionierelement (56) ferner konfiguriert und eingerichtet ist, um sich um die Drehachse des Kabelaufnahmeelements (54) zu drehen.

3. Fahrradschaltungssteuermechanismus gemäß einem der vorhergehenden Ansprüche, wobei
das Positionierelement (56) eine nichtkreisförmige Öffnung (56a) aufweist, die in der Mitte angeordnet ist und mit einem passenden Vorsprung (54d), der an dem Kabelaufnahmeelement (54) fixiert ist, in Eingriff kommt, wobei dazwischen ein Drehspiel gebildet ist, um den vorgegebenen Betrag an Drehbewegung zwischen dem Kabelaufnahmeelement (54) und dem Positionierelement (56) zu produzieren.

4. Fahrradschaltungssteuermechanismus gemäß einem der vorhergehenden Ansprüche, wobei
das Positionierelement (56) einen peripheren Rand mit einer Vielzahl von peripheren Positionierzähnen (56b) aufweist.

5. Fahrradschaltungssteuermechanismus gemäß Anspruch 4, der ferner Folgendes beinhaltet:
eine Position wahrende Sperrklinke (58), die konfiguriert und eingerichtet ist, um mit den peripheren Positionierzähnen (56b) des Positionierelements (56) selektiv in Eingriff zu kommen, um das Kabelaufnahmeelement (54) und das Positionierelement (56) selektiv umzuschalten.

6. Fahrradschaltungssteuermechanismus gemäß einem der vorhergehenden Ansprüche, der ferner Folgendes beinhaltet:
ein Freigabe vorspannendes Element (62), das konfiguriert und eingerichtet ist, um das Kabelaufnahmeelement (54) in einer ersten Drehrichtung in eine Ruheposition zu drängen.

7. Fahrradschaltungssteuermechanismus gemäß einem der vorhergehenden Ansprüche, wobei
das Wickelelement (68) einen peripheren Rand mit einer Vielzahl von peripheren Wickelzähnen (68b) aufweist.

8. Fahrradschaltungssteuermechanismus gemäß Anspruch 1, wobei
das Wickelelement (68) eine nichtkreisförmige Öffnung (68a) aufweist, die in der Mitte angeordnet ist und mit einem passenden Vorsprung (54d), der an dem Kabelaufnahmeelement (54) fixiert ist, in Eingriff kommt, um sich damit zu drehen.

9. Fahrradschaltungssteuermechanismus gemäß Anspruch 8, wobei
das Positionierelement (56) eine nichtkreisförmige Öffnung (56a) aufweist, die in der Mitte angeordnet ist und mit dem passenden Vorsprung (54d), der an dem Kabelaufnahmeelement (54) fixiert ist, in Eingriff kommt, wobei dazwischen ein Drehspiel gebildet ist, um den vorgegebenen Betrag an Drehbewegung zwischen dem Kabelaufnahmeelement (54) und dem Positionierelement (56) zu produzieren.

10. Fahrradschaltungssteuermechanismus gemäß Anspruch 9, wobei
der an dem Kabelaufnahmeelement (54) fixierte passende Vorsprung (54d) eine Vielzahl von im Allgemeinen radialen Widerlagern umfasst.

11. Fahrradschaltungssteuermechanismus gemäß entweder Anspruch 9 oder Anspruch 10, wobei
das Positionierelement (56) einen peripheren Rand mit einer Vielzahl von peripheren Positionierzähnen (56b) aufweist, und
das Wickelelement (68) einen peripheren Rand mit einer Vielzahl von peripheren Wickelzähnen (68b) aufweist.

12. Fahrradschaltungssteuermechanismus gemäß Anspruch 11, der ferner Folgendes beinhaltet:
eine Position wahrende Sperrklinke (58), die konfiguriert und eingerichtet ist, um mit den peripheren Positionierzähnen (56b) des Positionierelements (56) selektiv in Eingriff zu kommen, um das Kabelaufnahmeelement (54) und das Positionierelement (56) in einer ersten Drehrichtung selektiv umzuschalten, und
eine Wickelsperrklinke (72), die konfiguriert und eingerichtet ist, um mit den peripheren Wickelzähnen (68b) des Wickelelements (68) selektiv in Eingriff zu kommen, um das Kabelaufnahmeelement (54) und das Positionierelement (56) in einer zweiten Drehrichtung, die der ersten Drehrichtung entgegengesetzt ist, selektiv umzuschalten.

13. Fahrradschaltungssteuermechanismus gemäß Anspruch 12, der ferner Folgendes beinhaltet:
ein Freigabe vorspannendes Element (62), das konfiguriert und eingerichtet ist, um das Kabelaufnahmeelement (54) in der ersten Drehrichtung in eine Ruheposition zu drängen, in der das zwischen dem Kabelaufnahmeelement (54) und dem Positionierelement gebildete Drehspiel ermöglicht, dass sich das Kabelaufnahmeelement (54) und das Wickelelement (68) um einen vorgegebenen Betrag an Drehbewegung in der zweiten Drehrichtung bewegen, bevor das Positionierelement (56) anfängt, sich mit dem Kabelaufnahmeelement (54) zu drehen.

14. Fahrradschaltungssteuermechanismus gemäß entweder Anspruch 12 oder Anspruch 13, der ferner Folgendes beinhaltet:
ein Freigebeelement (76), das konfiguriert und eingerichtet ist, um die Position wahrende Sperrklinke (58) selektiv zwischen einer Position wahrenden Position und einer Position umschaltenden Position zu bewegen.

15. Fahrradschaltungssteuermechanismus gemäß Anspruch 14, wobei
das Freigebeelement (76) konfiguriert und eingerichtet ist, um sich um eine Drehachse, die von der Drehachse des Kabelaufnahmeelements (54) versetzt ist, zu drehen.

16. Fahrradschaltungssteuermechanismus gemäß Anspruch 14, der ferner Folgendes beinhaltet:
ein Wickelelement (70), das konfiguriert und eingerichtet ist, um die Wickelsperrklinke (72) selektiv zwischen einer Ruheposition und einer Wickelposition zu bewegen.

17. Fahrradschaltungssteuermechanismus gemäß Anspruch 16, wobei
das Wickelelement (70) konfiguriert und eingerichtet ist, um sich um die Drehachse des Kabelaufnahmeelements (54) zu drehen.

## Revendications

1. Un mécanisme de commande de changement de vitesse pour bicyclette comprenant :
un élément de tension de fil (54) configuré et agencé pour tourner autour d'un axe de rotation pour enrouler et libérer un fil de changement de vitesse (18a) ;
un élément d'enroulement (68) couplé à l'élément de tension de fil (54) et agencé pour tourner l'élément de tension de fil (54) autour de l'axe de rotation ; et
un élément de positionnement (56) couplé à l'élément de tension de fil (54), l'élément de positionnement (56) et l'élément d'enroulement (68) étant des éléments distincts, et l'élément de positionnement (56) étant configuré et agencé pour positionner de façon sélective l'élément de tension de fil (54) dans une position de changement de vitesse parmi une pluralité de positions de changement de vitesse prédéterminées,
**caractérisé en ce que** l'élément de positionnement (56) est couplé à l'élément de tension de fil (54) de façon à ce que l'élément de tension de fil (54) puisse se déplacer relativement à l'élément de positionnement (56) selon une première quantité prédéterminée de déplacement rotatoire durant un déplacement rotatoire de l'élément de tension de fil (54) et qu'ils se déplacent ensemble unitairement après ladite quantité prédéterminée de déplacement rotatoire durant ledit déplacement rotatoire de l'élément de tension de fil.

2. Le mécanisme de commande de changement de vitesse pour bicyclette selon la revendication 1, dans lequel
l'élément de positionnement (56) est en outre configuré et agencé pour tourner autour de l'axe de rotation de l'élément de tension de fil (54).

3. Le mécanisme de commande de changement de vitesse pour bicyclette selon l'une ou l'autre revendication précédente, dans lequel
l'élément de positionnement (56) a une ouverture non circulaire (56a) qui est située de façon centrale et se met en prise avec une projection d'accouplement (54d) fixée sur l'élément de tension de fil (54), un jeu de rotation étant formé entre ceux-ci pour produire la quantité prédéterminée de déplacement rotatoire entre l'élément de tension de fil (54) et l'élément de positionnement (56).

4. Le mécanisme de commande de changement de vitesse pour bicyclette selon n'importe quelle revendication précédente, dans lequel
l'élément de positionnement (56) a un bord périphérique présentant une pluralité de dents de positionnement périphériques (56b).

5. Le mécanisme de commande de changement de vitesse pour bicyclette selon la revendication 4, comprenant en outre
un cliquet de maintien de position (58) configuré et agencé pour se mettre en prise de façon sélective avec les dents de positionnement périphériques (56b) de l'élément de positionnement (56) pour indexer de façon sélective l'élément de tension de fil (54) et l'élément de positionnement (56).

6. Le mécanisme de commande de changement de vitesse pour bicyclette selon n'importe quelle revendication précédente, comprenant en outre
un élément de décalage de libération (62) configuré et agencé pour pousser l'élément de tension de fil (54) dans une première direction de rotation vers une position de repos.

7. Le mécanisme de commande de changement de vitesse pour bicyclette selon n'importe quelle revendication précédente, dans lequel
l'élément d'enroulement (68) a un bord périphérique présentant une pluralité de dents d'enroulement périphériques (68b).

8. Le mécanisme de commande de changement de vitesse pour bicyclette selon la revendication 1, dans lequel
l'élément d'enroulement (68) a une ouverture non circulaire (68a) qui est située de façon centrale et se met en prise avec une projection d'accouplement (54d) fixée sur l'élément de tension de fil (54) pour tourner avec celui-ci.

9. Le mécanisme de commande de changement de vitesse pour bicyclette selon la revendication 8, dans lequel
l'élément de positionnement (56) a une ouverture non circulaire (56a) qui est située de façon centrale et se met en prise avec la projection d'accouplement (54d) fixée sur l'élément de tension de fil (54), un jeu de rotation étant formé entre ceux-ci pour produire la quantité prédéterminée de déplacement rotatoire entre l'élément de tension de fil (54) et l'élément de positionnement (56).

10. Le mécanisme de commande de changement de vitesse pour bicyclette selon la revendication 9, dans lequel
la projection d'accouplement (54d) fixée sur l'élément de tension de fil (54) comporte une pluralité d'aboutements généralement radiaux.

11. Le mécanisme de commande de changement de vitesse pour bicyclette selon soit la revendication 9, soit la revendication 10, dans lequel
l'élément de positionnement (56) a un bord périphérique présentant une pluralité de dents de positionnement périphériques (56b), et
l'élément d'enroulement (68) a un bord périphérique présentant une pluralité de dents d'enroulement périphériques (68b).

12. Le mécanisme de commande de changement de vitesse pour bicyclette selon la revendication 11, comprenant en outre
un cliquet de maintien de position (58) configuré et agencé pour se mettre en prise de façon sélective avec les dents de positionnement périphériques (56b) de l'élément de positionnement (56) pour indexer de façon sélective l'élément de tension de fil (54) et l'élément de positionnement (56) dans une première direction de rotation, et
un cliquet d'enroulement (72) configuré et agencé pour se mettre en prise de façon sélective avec les dents d'enroulement périphériques (68b) de l'élément d'enroulement (68) pour indexer de façon sélective l'élément de tension de fil (54) et l'élément de positionnement (56) dans une deuxième direction de rotation qui est opposée à la première direction de rotation.

13. Le mécanisme de commande de changement de vitesse pour bicyclette selon la revendication 12, comprenant en outre
un élément de décalage de libération (62) configuré et agencé pour pousser l'élément de tension de fil (54) dans la première direction de rotation vers une position de repos dans laquelle le jeu de rotation formé entre l'élément de tension de fil (54) et l'élément de positionnement permet à l'élément de tension de fil (54) et l'élément d'enroulement (68) de se déplacer dans la deuxième direction de rotation de la quantité prédéterminée de déplacement rotatoire avant que l'élément de positionnement (56) ne commence à tourner avec l'élément de tension de fil (54).

14. Le mécanisme de commande de changement de vitesse pour bicyclette selon soit la revendication 12, soit la revendication 13, comprenant en outre
un élément de libération (76) configuré et agencé pour déplacer de façon sélective le cliquet de maintien de position (58) entre une position de maintien de position et une position d'indexation de position.

15. Le mécanisme de commande de changement de vitesse pour bicyclette selon la revendication 14, dans lequel
l'élément de libération (76) est configuré et agencé pour tourner autour d'un axe de rotation qui est déporté par rapport à l'axe de rotation de l'élément de tension de fil (54).

16. Le mécanisme de commande de changement de vitesse pour bicyclette selon la revendication 14, comprenant en outre
un élément d'enroulement (70) configuré et agencé pour déplacer de façon sélective le cliquet d'enroulement (72) entre une position de repos et une position d'enroulement.

17. Le mécanisme de commande de changement de vitesse pour bicyclette selon la revendication 16, dans lequel
l'élément d'enroulement (70) est configuré et agencé pour tourner autour de l'axe de rotation de l'élément de tension de fil (54).
